Europäisches Patentamt

European Patent Office

Office européen des brevets

(11) Veröffentlichungsnummer: **0 022 244**
**A1**

(12) **EUROPÄISCHE PATENTANMELDUNG**

(21) Anmeldenummer: **80103757.3**

(22) Anmeldetag: **02.07.80**

(51) Int. Cl.³: **F 24 J 3/02**
**E 04 D 13/00**

(30) Priorität: **06.07.79 CH 6342/79**

(43) Veröffentlichungstag der Anmeldung:
**14.01.81 Patentblatt 81/2**

(84) Benannte Vertragsstaaten:
**AT CH DE FR LI**

(71) Anmelder: **GEORG FISCHER AKTIENGESELLSCHAFT**
**Mühlentalstrasse 105**
**CH-8201 Schaffhausen(CH)**

(72) Erfinder: **Hurter, Fritz**
**Bocksrietstrasse 108**
**CH-8200 Schaffhausen(CH)**

(54) **Sonnenkollektor für schräge Dächer.**

(57) Der Sonnenkollektor (1) ist unten einer Bodenplatte (6) versehen, die sich von Seinem Rahmen (10) nach aussen erstreckt. Die äusseren Kanten des so gebildeten Blechkragens (2) sind derart abgebogen, dass ein Eindringen von Regenwasser bis zum Dachunterbau verhindert wird.

Der so entstandene Sonnenkollektor (1) ist einfach und preisgünstig herzustellen und leicht zu montieren. Er kann für jede Art von Ziegeln und sonstigen Dachbedeckungen verwendet werden, und der Blechkragen (2) neigt auf die Dauer weniger zur Rostbildung und undichten Stellen als bisherige Ausführungen, die meistens aus zusammengeschweissten Blechstreifen hergestellt wurden.

./...

EP 0 022 244 A1

Fig. 1

Fig. 2

GEORG FISCHER AKTIENGESELLSCHAFT, 8201 Schaffhausen

2106/FIT / 4.7.1979 / LG-bs

Sonnenkollektor für schräge Dächer

Die Erfindung betrifft einen Sonnenkollektor für schräge Dächer, mit einem Bodenblech, einem Rahmen, einem darin angeordneten, plattenförmigen Körper und mindestens einer diesen zudeckenden Glasplatte.

Beim Ausrüsten von bestehenden Häusern mit Sonnenkollektoren werden diese meistens über die Dachbedeckung verlegt, die in der Regel aus Ziegeln besteht.

Wenn Sonnenkolektoren an einem schrägen Dach montiert werden, können sie in die Dachbedeckung integriert werden, so dass das Dach abwechselnd von Sonnenkollektoren und Ziegeln bedeckt ist. In diesen Fällen werden die Ziegel rund um die Kollektoren verlegt, wobei aber eine gute Abdichtung zwischen den Kollektoren und den Ziegeln notwendig ist, damit kein Wasser durch das Dach einsickert. Eine einwandfreie, sichere und dauerhafte Abdichtung ist schwierig zu erreichen und zudem zeitraubend. Meistens wurden rahmenförmige Blechkragen bzw. Eindeckrahmen angefertigt, wie dies auch bei Dachfenstern üblich ist.

Bestehende Ausführungen sind unter anderem mit den folgenden Nachteilen behaftet:

- Die Eindeckrahmen müssen separat angefertigt und am Sonnenkollektor befestigt werden.

- Die Abdichtung zwischen dem Sonnenkollektor und dem Eindeckrahmen ist oft unbefriedigend bzw. zu wenig dauerhaft.

- Für die Befestigung des Eindeckrahmens am Sonnenkollektor werden Befestigungsmittel benötigt.

- Die Anpassung und die Montage des Eindeckrahmens an den Sonnenkollektoren sind arbeitsintensiv bzw. zeitraubend.

- Die Eindeckrahmen werden normalerweise aus Blechstreifen zusammengeschweisst, wobei die Schweissstellen leicht rosten und/oder Leckstellen aufweisen oder erhalten können.

Die Aufgabe der vorliegenden Erfindung ist es deshalb, einen Sonnenkollektor für schräge Dächer zu schaffen , der die Nachteile bestehender Ausführungen nicht aufweist.

Dabei geht es in erster Linie darum, die Montage der Sonnenkollektoren zu vereinfachen, um damit Kosten zu sparen.

Ferner soll die Ausführung so gestaltet sein, dass ein einfacher und doch sicherer, dauerhafter und wasserdichter Abschluss zwischen dem Kollektor und den angrenzenden Ziegeln geschaffen wird.

Ferner soll es möglich sein, die geschaffene Ausführung für verschiedene Arten von Ziegeln und anderen Dachbedeckungen mit gleich gutem Resultat zu verwenden.

Die erfindungsgemässe Aufgabe ist mit der Lehre gemäss dem gekennzeichneten Teil des Anspruches 1 gelöst.

Ausführungsformen dieser Lehre sind in den weiteren, abhängigen Ansprüchen umschrieben.

Ein derart ausgebildeter Sonnenkollektor wird montagefertig angeliefert. Er kann einfach auf das Dach befestigt und anschliessend die Ziegel rund um seinen Rahmen gelegt werden. Die bisher übliche Anfertigung von Eindeckrahmen sowie deren Befestigung und Abdichtung am Kollektorrahmen sind hinfällig.

Ferner werden die zwischen dem Kollektor und dem Eindeckrahmen möglichen Leckstellen vollständig vermieden. Zudem werden die Leckstellen an den Schweissnähten zwischen den verschiedenen Blechstreifen sowie die durch den Schweissvorgang oft begünstigte Rostbildung, die relativ leicht zu Löchern führen kann, vollständig vermieden.

Somit ist der beschriebene Sonnenkollektor einfacher, billiger und schneller herzustellen und zu montieren als bestehende Ausführungen. Zudem ist die Gefahr einer undichten Stelle praktisch ausgeschlossen.

Nachfolgend wird ein Ausführungsbeispiel des erfindungsgemässen Sonnenkollektors anhand der Zeichnung näher erläutert. Es zeigen:

Fig. 1    eine Draufsicht eines Sonnenkollektors,

Fig. 2    einen Teil-Querschnitt durch den Sonnenkollektor nach Fig. 1, in grösserem Massstab,

Fig. 3    einen Längsschnitt durch den Sonnenkollektor nach Fig. 1,

Fig. 4    einen Schnitt längs der Linie IV - IV in Fig. 1,

Fig. 5 einen Schnitt längs der Linie V - V in Fig. 1,

Fig. 6 einen Schnitt längs der Linie VI - VI in Fig. 1,

Fig. 7 eine Draufsicht des auf ein Dach montierten Sonnenkollektors nach Fig. 1,

Fig. 8 einen Schnitt längs der Linie VIII - VIII in Fig. 7,

Fig. 9 einen Ausschnitt IX aus Fig. 8, in grösserem Massstab,
und

Fig. 10 ein Detail X aus Fig. 7 jedoch senkrecht zur Dachfläche
und in grösserem Massstab.

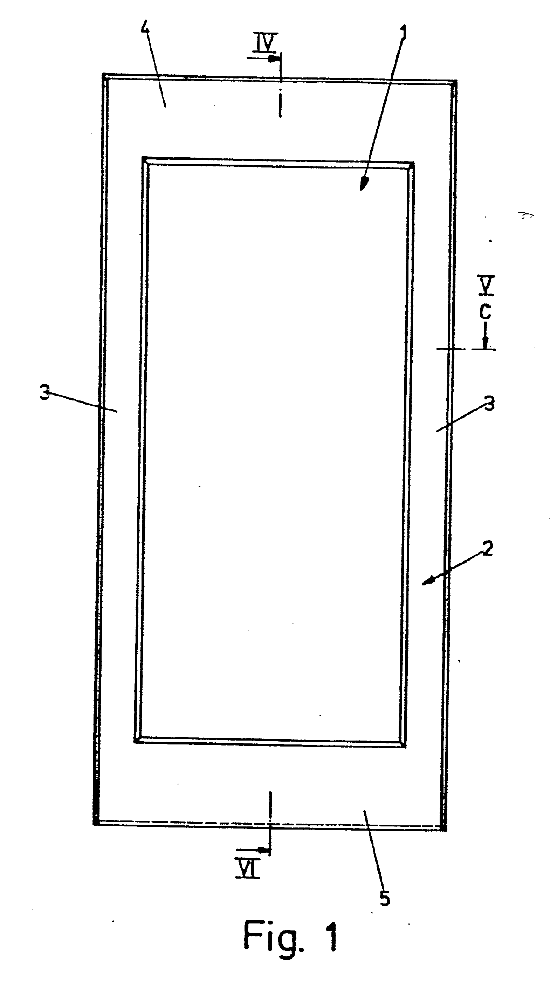

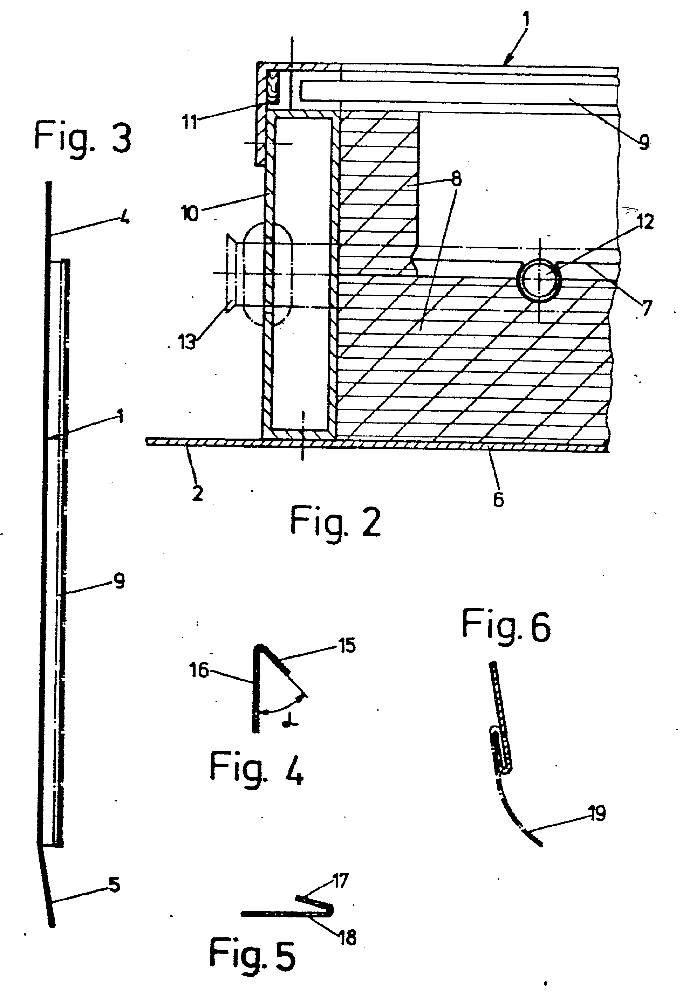

In Fig. 1 ist ein Sonnenkollektor 1 mit einem Kragen 2 dargestellt, der aus zwei seitlichen 3, und je einem oberen 4 und
unteren Rand 5 besteht. Aus Fig. 2 geht hervor, dass der Kragen 2 aus dem verlängerten Bodenblech 6 des Kollektors 1 besteht.

Der eigentliche Kollektor 1 besteht aus einem Absorber 7, der
gegenüber dem Bodenblech 6 und dem Rahmen 10 einen Wärmeisolator 8 aufweist. Der Rahmen 10 des Kollektors 1 wird von einem
Hohlprofil gebildet, auf dem die Glasplatte 9 ruht, die von
einem Winkelprofil 11 gegen das Hohlprofil gehalten wird. Ferner schliesst der Absorber 7 Wasserrohre 12 und zwei Rohrstutzen 13 ein.

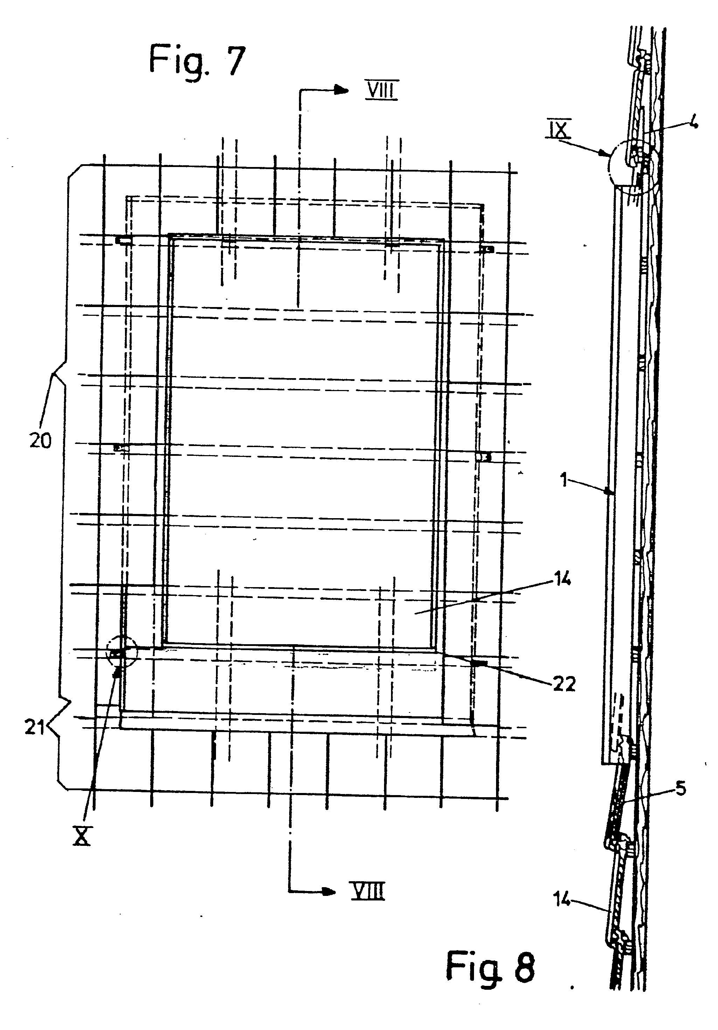

In Fig 3 ist ein Schnitt durch den Kollektor 1 dargestellt,
aus welchem Schnitt hervorgeht, dass der untere Rand 5 nach
oben gebogen ist, damit die Ziegel 14 (Fig. 7) unter diesem
Rand 5 verlegt werden können.

Fig. 4 zeigt einen Vertikalschnitt durch den oberen Rand 4, dessen Kante nach oben gebogen ist, so dass die beiden Teile 15 und 16 dieses Randes 4 einen Winkel $\alpha$ miteinander bilden.

In Fig. 5 ist ein der Fig. 4 entsprechender Schnitt durch den Seitenrand 3 gezeigt, wobei die beiden Teile 17, 18 dieses Randes 3 einen Winkel $\beta$ miteinander bilden.

Ein Vertikalschnitt durch den unteren Rand 5 ist in Fig. 6 gezeigt, wobei dieser Rand 5 über eine Länge von z.B. 15 mm um $180^\circ$ gebogen ist, damit eine Rinne zur Aufnahme einer Bleischürze 19 entsteht, die entsprechend abgebogen ist. Diese, von den beiden Teilen 15 und 19 gebildete Verbindung kann derart zusammengepresst werden, dass ein wasserdichter Abschluss entsteht.

In Fig. 7 ist eine Draufsicht eines auf einem Dach montierten Kollektors dargestellt, wobei die oberen Ziegel 20 über den Kragen 2, während die unteren 21 unter diesem 2 angeordnet sind. Dadurch wird erreicht, dass das Regenwasser oder der schmelzende Schnee am unteren Teil des Kollektors 1 über die untersten, nicht gezeigten Ziegel fliesst. In den vier Ecken 22 des Kollektors ist ein kleines Viereck des Kragens 2 ausgeschnitten, um den sich umkehrenden Biegesinn des Kragens 2 an diesen Stellen zu ermöglichen.

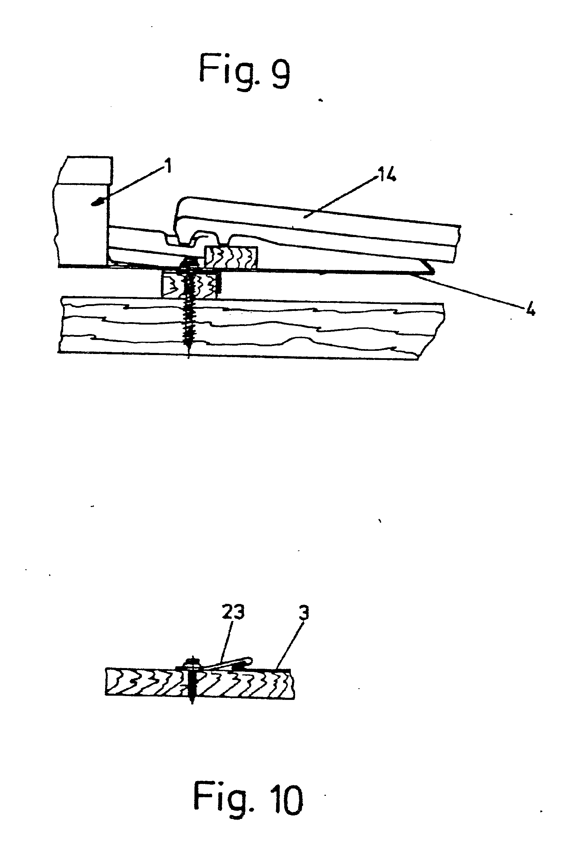

Fig. 8 zeigt einen Schnitt, aus dem der Verlauf der beiden Ränder 4 und 5 ersichtlich ist, wobei der obere Rand 4 aus Fig. 9 noch deutlicher hervorgeht.

Eine mögliche Ausführung zur Halterung und Abdichtung der seitlichen Ränder 3 ist in Fig. 10 dargestellt, wobei die abgebogene Kante dieses Randes 3 von einem angeschraubten Blechstreifen 23 niedergedrückt wird.

Aus der vorangehenden Beschreibung geht hervor, dass die vorliegende Ausführung einfach, leicht und preisgünstig zu montieren ist. Der Kollektor kann direkt vom Zulieferanten bezogen und auf dem Dach montiert werden, wobei die Herstellung von Eindeckrahmen nicht notwendig ist. Solche Rahmen mussten bisher in einer Werkstatt zugeschnitten und verschweisst werden. Allein durch den Wegfall dieser Rahmen werden grosse Einsparungen erzielt.

## Patentansprüche

1. Sonnenkollektor für schräge Dächer, mit einem Bodenblech, einem Rahmen, einem darin angeordneten, plattenförmigen Körper und mindestens einer diesen zudeckenden Glasplatte, dadurch gekennzeichnet, dass sich eine Verlängerung des Bodenblechs (6) an allen Seiten des Kollektors (1) zu einem Kragen (2) rund um die vier Seiten des Rahmens (10) erstreckt, und dass die äusseren Kanten dieses Kragens (2) abgebogen sind.

2. Sonnenkollektor nach Anspruch 1, dadurch gekennzeichnet, dass, bezogen auf die Dachfläche, der obere Rand (4) und die Seitenränder (3) an ihren Kanten von der Dachfläche aufwärts gegen die untere Fläche der Ziegel (14) gebogen sind.

3. Sonnenkollektor nach Anspruch 2, dadurch gekennzeichnet, dass die drei Kanten um mehr als 90° gebogen sind.

4. Sonnenkollektor nach Anspruch 1, 2 oder 3, dadurch gekennzeichnet, dass die Kante des unteren Randes (5) nach unten um beinahe 180° gebogen ist, so dass eine Rinne zur Aufnahme einer entsprechend gebogenen Bleischürze (19) entsteht.

5. Sonnenkollektor nach Anspruch 4, dadurch gekennzeichnet, dass die untere Kante mit der Bleischürze (19) zu einer wasserdichten Verbindung verklemmbar ist (Fig. 6).

6. Sonnenkollektor nach Anspruch 4 oder 5, dadurch gekennzeichnet, dass aus den beiden unteren Ecken (22) des Kragens (2) ein viereckiges Stück ausgeschnitten ist, damit der unterschiedliche Biegesinn der Seitenränder (3) und des unteren Randes (5) leichter herstellbar ist.

7. Sonnenkolektor nach einem oder mehreren der Ansprüche 1 bis

6, dadurch gekennzeichnet, dass der untere Teil des Kragens (2) bezogen auf die Kollektoren nach oben gebogen ist, damit er (2) über den Ziegeln (14) oder der Dachbedeckung zu liegen kommt. (Fig. 7)

Fig. 1

# Fig. 3

# Fig. 2

# Fig. 4

# Fig. 6

# Fig. 5

# Fig. 7

# Fig 8

# Fig. 9

# Fig. 10

0022244

**Europäisches Patentamt**

# EUROPÄISCHER RECHERCHENBERICHT

Nummer der Anmeldung

EP 80 10 3757.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A1 - 2 399 630 (SCHWOB)<br>* Seite 3, Zeilen 22 bis 26 *<br>-- | 1 |
| | DE - A1 - 2 721 343 (BITTER)<br>* Seite 9, Absatz 2 bis Seite 10, Absatz 1 *<br>-- | 1 |
| | DE - A1 - 2 724 314 (STRAZA)<br>* Fig. 2, Positionen 24, 26; Fig. 8, Positionen 70, 72 *<br>-- | 1 |
| | Patents Abstracts of Japan, Band 3, Nr. 93, 8. August 1979<br>Seite 93M68 , 1. Juni 1979<br>& JP - A - 54 - 68535<br>* Fig., Positionen 12, 13 *<br>---- | 1 |

### KLASSIFIKATION DER ANMELDUNG (Int.Cl.³)

F 24 J 3/02
E 04 D 13/00

### RECHERCHIERTE SACHGEBIETE (Int. Cl.³)

E 04 D 13/00
F 24 J 3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 01-10-1980 | PIEPER |

EPA form 1503.1  06.78